Europäisches Patentamt

European Patent Office

Office européen des brevets

(19)

(11) Publication number: **0 332 279**
B1

# EUROPEAN PATENT SPECIFICATION

(45) Date of publication of the patent specification:
18.07.90

(51) Int. Cl.⁵: **B66F 3/42**, B62D 33/06

(21) Application number: 89200567.9

(22) Date of filing: 06.03.89

(54) Hydraulic control unit.

(30) Priority: 09.03.88 NL 8800590

(43) Date of publication of application:
13.09.89 Bulletin 89/37

(45) Publication of the grant of the patent:
18.07.90 Bulletin 90/29

(84) Designated Contracting States:
DE FR GB IT NL SE

(56) References cited:
NL-A- 22 849

(73) Proprietor: **Applied Power Inc., 250 Executive Drive, Brookfield Wisconsin 53005(US)**

(72) Inventor: **Kolhoff, Hendrik, Bizetstraat 20, NL-7482 AN Haaksbergen(NL)**

(74) Representative: **Boelsma, Gerben Harm, Ir. et al, Octrooibureau Polak & Charlouis Laan Copes van Cattenburch 80, NL-2585 GD Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a hydraulic control unit according to the first part of the attached claim.

A hydraulic control unit of this type is disclosed in NL-A 22 849. In this well-known control unit the rotary valve body 5 has a frusto-conical shape. The pressure duct is connected to the pump cylinder at a location on the piston rod side of the pump cylinder space, which means, that the piston rod packing is subjected to the full pressure. The plug member in the well-known control unit is functioning as a holding member for the pressure valve means only.

A similar control unit is known from the NL-A 172 361. In this known control unit the housing comprises a bore on the one hand in which the control valve in the embodiment of a rotary valve is rotatably journalled, whereas on the other hand a pump cylinder is provided in this housing, the axis of which perpendicularly intersects the axis of the rotary valve. At the upper end of the pump cylinder bore there is a block, to be recessed therein and containing the suction and pressure valves. The connection of the pressure ducts in the valve with the pressure side of the pump is established by a connecting duct opening in the wall of the valve bore. Also at the position of this connecting duct the valve has a hollow cylindrical sealing element sealing against the bore wall. Therefore this known valve comprises a plurality of sealing elements and the added sealing pressures may resist considerably the rotation of the valve from one (operative) position to the other.

The present invention aims at improving the known control units and more specifically to provide a hydraulic control unit of the type indicated hereinabove, which may be operated at relatively high pressures, while the rotary movement of the rotary valve body requires little force and the chances of leakage of hydraulic fluid is kept to a minimum.

According to the invention this aim is achieved in that said valve body has a cylindrical shape, whereby said plug member is mounted within said counterbored portion for having its radial outer end sealingly engaging said house boring and said pressure duct merges into a duct connected to the inner end of said pump cylinder. A cylindrical shape of the rotary valve body, as proposed by the present invention, in combination with a sealing plug member within said pressure duct, provides for excellent sealing even at high pressures, while the integrally formed control valve and pump cylinder may still be easily turned within the housing.

The invention is further explained below with reference to the drawing of an embodiment given as an example.

Fig. 1 is a vertical section of the control unit according to the invention;

Fig. 2 is an elevation as seen from left in Fig. 1 and

Fig. 3 is a cross-section according to the line III-III in Fig. 1.

The control unit as shown in the drawing comprises a relatively flat block shaped housing 1 having a cylindrical bore 2. A reservoir 3 for hydraulic liquid is secured against the downwardly facing end surface of the housing 1. A substantially cylindrical body 5 is journalled in the bore 2 with a normal or ample clearance with the interposition of an O-ring 6 and is supported through a collar 7 on the upper end surface of the housing 1. The body 5 is locked therein in the axial direction relative to the housing 1 by a closing ring 9 engaging over the collar 7 and secured to the housing 1 by screws 8.

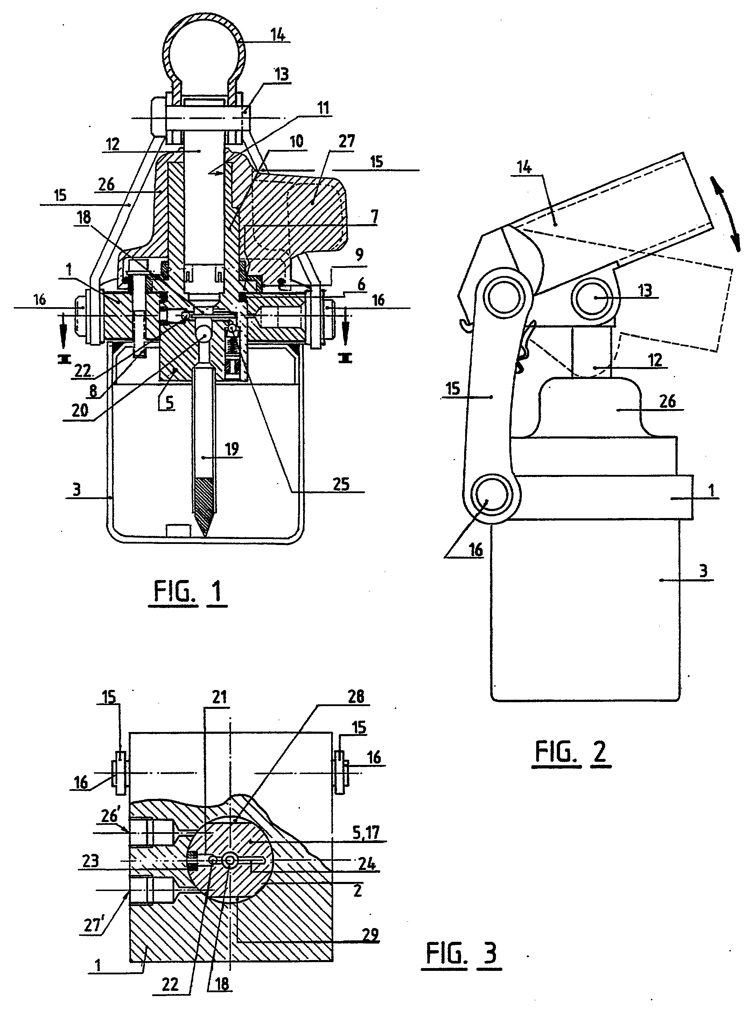

The upper part 10 of the body 5 projecting beyond the upper surface of the housing 1 has a cylindrical bore 11 and constitutes the cylinder of a plunger pump, the plunger of which is indicated by the reference numeral 12. The end of the plunger 12 extending beyond the upper end of the cylinder 10 is coupled in known manner pivotally at 13 to a rocking piece 14 which is adapted for inserting therein an operating rod (not shown). This rocking piece is connected on the other hand to two pivot levers 15 which are in engagement with two pivot taps 16 provided in two opposite side walls of the housing. The rocking piece 14 may be moved upwardly and downwardly in the directions of the arrow (see Fig. 2) and therewith establish a pumping movement of the plunger 12. The lower part 17 of the body 5 has a central duct 18 connecting the bottom end of the cylinder bore 11 to the suction tube 19 extending into the reservoir 3. A ball shaped suction valve 20, closing toward the reservoir, is provided in the duct 18. At a position situated between the bottom end of the cylinder bore 11 and the ball valve 20 a radial duct 21 is branched off the central duct 18 and opens in the peripheral surface of the said part 17. A pressure valve 22 in the embodiment of a ball valve is provided in the radial duct 21, opening radially outwardly against spring force. The end of the duct 21 opening in the peripheral surface of the part 17 furthermore is counterbored into a chamber in which a hollow cylindrical sealing element 23 is provided, manufactured of a suitable synthetic material and sealingly engaging the wall of the bore 2, also under the influence of the pressure in the duct 21. A second branch duct 24 opens at the lower end surface of the part 17 situated above the reservoir 3. Said branch contains a ball valve 25 which is adapted to open against spring force toward the reservoir 3 if the pressure in the duct 18 increases over its maximum.

In order to be able to rotate the body 5 and therewith to permit bringing the rotary valve portion 17 thereof in the desired operative or rest position respectively, a cap 26 passing the plunger 12 is provided on the cylinder part 10. Said cap is coupled with the cylinder part 10 such that it is prevented to be rotated and has a lateral thumb-finger piece 27.

In the embodiment shown the housing 1 has two connecting ports 26' and 27' respectively for the ends of the piston cylinder device to be operated, e.g. a double action hydraulic cylinder for tilting a truck cabin. Both ports have their axes contained in the same cross-sectional plane and the radial duct 21 in the part 17 acting as the control valve (see also Fig. 3). The control valve part 17 is further provided with two diametrally opposed flats 28 and 29 continuing in the axial direction in the chamber of the reservoir 3.

The drawing shows the neutral position of the body 5, 17. In this position the sealing element 23 faces the solid wall of the bore 2 and moving the pump plunger upwardly and downwardly will only result therein that hydraulic liquid, sucked from the reservoir through the valve 20, is returned to the reservoir through the overload valve 25. The body 5, 17 arrives in an operative position by rotating it from the position shown (Fig. 3) through an angle of about 45° to the right or to the left. The port 26′ or 27′ respectively will then face the hollow space of the sealing element 23 whereby the relative end of the piston cylinder device to be controlled is connected with the pressure side of the pump. Simultaneously the other port 27′ or 26′ respectively becomes connected with the flat 29 or 28 respectively whereby the liquid forced out at the relative end of the piston cylinder device is permitted to flow towards the reservoir.

## Claim

A hydraulic control unit, in particular for operating a hydraulic cylinder device, comprising a housing (1) having connecting ports (26′, 27′) for supply and return conduits to and from the cylinder device to be operated, a reservoir (3) for hydraulic fluid, a hydraulic plunger pump (11, 12) connected therewith and having suction and pressure valve means (20, 22), the cylinder of said plunger pump being integrally and coaxially formed in a body which is mounted for rotary adjustment in a corresponding bore (2) of said housing, said body forming a rotary control valve (5) being provided with at least one pressure duct (21) which is connected to the pump cylinder on the one hand and merges into the peripheral surface of said valve body and being further also provided with at least one discharge duct (28, 29) which is permanently connected to the reservoir (3), said pressure duct (21) and discharge duct (28, 29) being - dependent on the angular position of said valve body within said housing (1) - selectively connectable to either one of said connected ports (26′, 27′), wherein said pressure duct has a counterbored portion at its radially outer end, said counterbored portion accommodating said pressure valve means and being at its radially outer end partially obtured by means of a perforated plug member (23), characterized in that said valve body (5, 10) has a cylindrical shape; that said plug member (23) is mounted within said counterbored portion for having its radial outer end sealingly engaging said house boring (2) and that said pressure duct (21) merges into a duct (18) connected to the inner end of said pump cylinder (10, 11).

## Patentanspruch

Hydraulische Steuereinheit, insbesondere zum Betreiben einer hydraulischen Zylindervorrichtung, versehen mit einem Gehäuse (1) mit Verbindungsanschlüssen (26′, 27′) für Zufuhr- und Abfuhrleitungen zu bezw. von der zu betreibenden Zylindervorrichtung, einem Behälter (3) für hydraulische Flüssigkeit, einer mit letzterem verbundenen hydraulischen Plungerpumpe (11, 12) mit Saug- und Druckventilen (20, 22), wobei der Zylinder der Plungerpumpe aus einem Stück und koaxial in einem Körper gebildet ist, der in einer entsprechenden Bohrung (2) des Gehäuses drehbar verstellt werden kann, welcher Körper einen Drehschieber (5) bildet, welcher mindestens ein Druckkanal (21) aufweist, der einerseits mit der Pumpenzylinder verbunden ist und andererseits in der Umfangsfläche des genannten Ventilkörpers ausmündet und welcher zum weiteren mit mindestens einem Ablaufkanal (28, 29) versehen ist, der mit dem Behälter (3) dauernd verbunden ist, welcher Druckkanal (21) und Ablaufkanal (28, 29) wahlweise - und zwar in Abhängigkeit der Winkellage des Ventilkörpers innerhalb des Gehäuses (1) - mit je einer der genannten Verbindungsanschlüssen (26′, 27′) verbindbar sind, wobei der Druckkanal an seinem äusseren Ende eine erweiterte Bohrung aufweist, in der sich das Druckventil befindet und welche am äusseren Ende zum Teil abgeschlossen wird mittels eines perforierten Pfropfen (23) dadurch gekennzeichnet, dass der Ventilkörper (5, 10) eine zylindrische Form aufweist; dass der Pfropfen (23) in der Weise in der erweiterten Bohrung montiert ist, dass das äussere Ende desselben abdichtend in der Gehäusebohrung (2) anliegt, während der Druckkanal (21) in einem Kanal (18) mündet, der mit dem inneren Ende des Pumpenzylinders (10, 11) verbunden ist.

## Revendication

Unité de commande hydraulique, en particulier pour faire fonctionner un dispositif à cylindre hydraulique, comprenant un logement (1) ayant des orifices de connexion (26′, 27′) pour des conduits d'alimentation et de retour vers et d'un dispositif à cylindre à commander, un réservoir (3) du fluide hydraulique, une pompe à piston hydraulique (11, 12) qui lui est connectée et ayant des moyens formant clapet d'aspiration et de pression (20, 22), le cylindre de ladite pompe à piston étant intégralement et coaxialement formé dans un corps qui est monté pour un ajustement rotatif dans un perçage correspondant (2) dudit logement, ledit corps formant une soupape rotative de commande (5) qui est pourvue d'au moins une gaine de pression (21) et qui est connectée au cylindre de pompe d'une part et se confond dans la surface périphérique dudit corps de soupape et qui est de plus pourvue d'au moins une gaine d'évacuation (28, 29) qui est connectée en permanence au réservoir (3), ladite gaine de pression (21) et ladite gaine d'évacuation (28, 29) étant, selon la position angulaire dudit corps de soupape dans ledit logement (1), sélectivement connectable à l'un des orifices connectés (26′, 27′), où ladite gaine de pression à une portion réalésée à son extrémité radialement externe, ladite portion réalésée recevant ledit moyen formant soupape de pression et étant à son extrémité radialement externe partiellement obturée au moyen d'un organe formant bouchon perforé (23), caractérisée en ce que ledit corps de soupape (5, 10) est de forme cylindrique; en ce que ledit organe formant bouchon (23) est monté dans la portion réalésée pour que son extrémité radiale externe soit en engagement d'étanchéité avec ledit perçage (2) du logement et en ce que la gaine de pression (21) se confond avec une gaine (18) qui est reliée à l'extrémité interne dudit cylindre de pompe (10, 11).

FIG. 1

FIG. 2

FIG. 3